# EUROPEAN PATENT SPECIFICATION

(11) **EP 2 279 344 B1**
(45) Date of publication and mention of the grant of the patent: **24.04.2013**
(21) Application number: 09714497.6
(22) Date of filing: 17.02.2009
(51) Int. Cl.: F03B 17/06, E02B 9/06

(54) **ELECTRICITY GENERATING ARRANGEMENT**
ANORDNUNG ZUR ERZEUGUNG VON ELEKTRIZITÄT
AMENAGEMENT GENERANT DE L'ELECTRICITE

(30) Priority: 25.02.2008 ZA 200801762
(43) Date of publication of application: 02.02.2011
(73) Proprietor: Van Blerk, Coenraad Frederik, 1459 Boksburg (ZA)
(72) Inventor: Van Blerk, Coenraad Frederik, 1459 Boksburg (ZA)
(74) Representative: Coret, Sophie V.G.A.
(86) International application number: PCT/IB2009/000277
(87) International publication number: WO 2009/106945

(56) References cited:
- WO-A1-2005/090778
- CH-A5- 610 058
- DE-A1- 3 800 192
- DE-U1-202004 003 596
- JP-A- 57 017 024
- JP-A- 60 047 883
- US-A- 1 726 405
- US-A- 5 140 254
- US-B1- 6 765 308

## Description

### FIELD OF THE INVENTION

This invention relates to an electricity generating arrangement.

### BACKGROUND OF THE INVENTION

There are many different ways of generating electricity. With the ever-growing shortage of natural resources, there is a continuous need of finding alternative ways of generating electricity. The well-known alternative ways make use of water, solar energy or wind to ultimately generate electricity. Each of these options have their disadvantages, with cost and long timeframes for installing and commissioning the associated equipment making these alternative ways not feasible in situations where electricity is needed urgently.

Japanese patent application JP 57 017204 discloses an arrangement to control a discharge flow rate so to maintain the level of a downstream reservoir at a certain value.

US 6, 765, 308 describes the use of a hydraulic turbine in a domestic water supply for the purpose of generating electricity locally.

### OBJECT OF THE INVENTION

It is therefore an aim of the present invention to provide an arrangement that makes use of flowing water to generate electricity, but that is relatively quick, easy and inexpensive to setup.

### SUMMARY OF THE INVENTION

According to a first aspect of the invention there is provided an electricity generating arrangement comprising:
at least one secondary water conduit fitted to a primary water conduit which is fitted with a pressure reducing valve, the secondary water conduit defining an inlet for allowing water flowing through the primary water conduit to enter the secondary water conduit and an outlet for allowing water flowing through the secondary water conduit to exit the secondary water conduit so as to rejoin the primary water conduit the secondary water conduit comprising substantially elongate portion that runs substantially parallel to the primary water conduit; and
at least one rotatable turbine located within the secondary water conduit, each turbine being connectable to a generator so that under the influence of the water flowing through the secondary water conduit, the turbine can rotate so as to drive the generator to generate electricity.

In an example embodiment, an inlet valve is located within the secondary water conduit, adjacent the inlet, and an outlet valve is located within the secondary water conduit, adjacent the outlet.

In an example embodiment, the turbine comprises either a fin arrangement or a threaded screw.

In an example embodiment, the primary water conduit is part of a residential/municipal water distribution system.

In an alternate example embodiment, the primary water conduit is defined by a natural conduit carrying water, such as a river.

According to a second aspect of the invention there is provided a method of fitting an electricity generating arrangement to a primary water conduit which is fitted with a pressure reducing valve, the method comprising:
stopping the flow of water through the primary water conduit;
defining an outlet and an inlet in a side wall of the primary water conduit; and
fitting a secondary water conduit to the primary water conduit, the secondary water conduit comprising a substantially elongate portion that runs substantially parallel to the primary water conduit, the secondary water conduit defining an inlet that can be in fluid communication with the outlet defined in the primary water conduit, the secondary water conduit defining an outlet that can be in fluid communication with the inlet defined in the primary water conduit, the secondary water conduit housing a rotatable turbine, the turbine being connectable to a generator,
so that water flowing through the primary water conduit can enter the secondary water conduit, flow through the secondary water conduit and exit the secondary water conduit so as to rejoin the primary water conduit, so that under the influence of the water flowing through the secondary water conduit, the turbine can rotate so as to drive the generator to generate electricity.

In an example embodiment, the method includes fitting an inlet valve within the secondary water conduit, adjacent its inlet, and fitting an outlet valve within the secondary water conduit, adjacent its outlet.

### BRIEF DESCRIPTION OF THE DRAWINGS

- **Figure 1**: shows a schematic top view of an electricity generating arrangement according to a first example embodiment of the present invention;
- **Figure 2**: shows a schematic view of the arrangement shown in Figure 1 connected to a reticulation grid;
- **Figure 3**: shows a flow chart representing a method of fitting an electricity generating arrangement to a primary water conduit, according to a first example embodiment;
- **Figure 4**: shows a schematic top view of an electricity generating arrangement according to a second example embodiment of the present invention;
- **Figure 5**: shows a schematic top view of an electricity generating arrangement according to a third example embodiment of the present invention; and
- **Figure 6**: shows a flow chart representing a method of fitting an electricity generating arrangement to a primary water conduit, according to a second example embodiment.

### DESCRIPTION OF PREFERRED EMBODIMENTS

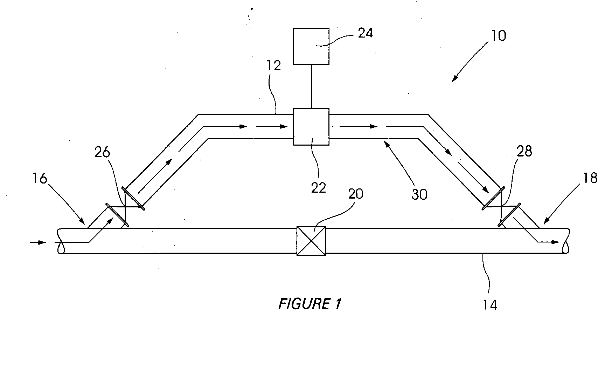

Referring first to Figure 1, an electricity generating arrangement 10 comprises a secondary water conduit 12, typically in the form of a pipe, fitted to a primary water conduit 14, which, again, is typically also in the form of a pipe. The secondary water pipe 12 defines an inlet 16 for allowing water flowing through the primary water pipe 14 to enter the secondary water pipe 12.

The secondary water pipe 12 further defines an outlet 18 for allowing water flowing through the secondary water pipe 12 to exit the secondary water pipe 12 so as to rejoin the primary water pipe 14, as indicated by the arrows in the figure.

The primary water pipe 14 includes a pressure reducing device, in the form of a pressure reducing valve 20, as is well known in the art.

Significantly, a rotatable turbine 22 is located within the secondary water pipe 12, the turbine 20 being connectable to a generator 24 so that under the influence of the water flowing through the secondary water pipe 12, the turbine 22 can rotate so as to drive the generator 24 to generate electricity for distribution or storage.

In an example embodiment, an inlet valve 26 is located within the secondary water pipe 12, adjacent the inlet 16, and an outlet valve 28 is located within the secondary water pipe 12, adjacent the outlet 18. The valves 26, 28 may take the form of a non return valve and/or pressure reducing valve, depending on a number of factors, such as the size of supply and location, the water pressure and the anticipated water flow speed.

In addition, although not shown in Figure 1, one or more booster pumps may be fitted, if and when needed.

In an example embodiment, the secondary water pipe 12 comprises a substantially elongate portion 30 that runs substantially parallel to the primary water pipe 14.

In an example embodiment, the turbine 22 comprises either a fin arrangement or a threaded screw.

In an example embodiment, the primary water pipe 14 is part of a residential/municipal water pipe system. In particular, the water pipe system may be part of a local government, government, semi-government or privately owned water distribution network.

In an alternate example embodiment, the primary water pipe is defined by anatural conduit carrying water, such as a river. In this embodiment, pumps may be fitted to pump the water out of the river, through the secondary water pipe, and then back into the river.

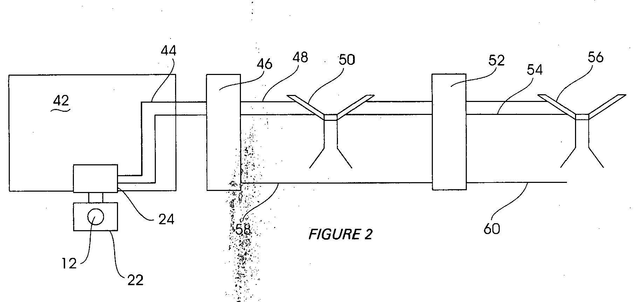

Turning now to Figure 2, the relationship between the electricity generating arrangement 10 shown in Figure 1 and an electrical reticulation grid or network is shown. Figure 2 shows the secondary water pipe 12, turbine 22 and generator 24, as described above. The generator 24 may be housed within a suitable power station 42, with connection cables 44 extending from the generator 24 to a transformer station 46. From the transformer station 46, overhead cables 48 connect the transformer station 46 to a mast 50, and then from the mast 50 to another transformer station 52. A further overhead cable 54 may carry the electricity to another mast 56, which can then further distribute the electricity as needed.

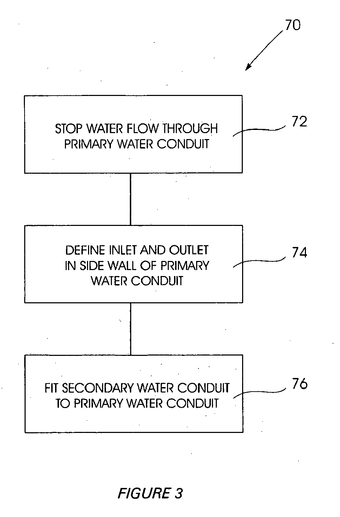

Alternatively, or in addition, underground cables 58, 60 may also be used to carry the electricity to a transformer station 46 or 52, and then onto a mini substation or directly to a consumer. Clearly, the reticulation network may be designed in any one of a number of well-known ways, with the grid shown in Figure 3 representing only one illustrative way of doing this.

Turning now to Figure 3, a method 70 of fitting an electricity generating arrangement to a primary water pipe will be described. This method 70 comprises stopping the flow of water through the primary water pipe, as indicated by block 72. The method 70 then comprises defining an outlet and an inlet in a side wall of the primary water pipe, as indicated by block 74. The method 70 concludes by fitting a secondary water pipe to the primary water pipe, as indicated by block 76.

As described above, the secondary water pipe defines an inlet that can be in fluid communication with the outlet defined in the primary water pipe. The secondary water pipe further defines an outlet that can be in fluid communication with the inlet defined in the primary water pipe. The secondary water pipe houses a rotatable turbine, the turbine being connectable to a generator, so that water flowing through the primary water pipe can enter the secondary water pipe, flow through the secondary water pipe and exit the secondary water pipe so as to rejoin the primary water pipe, so that under the influence of the water flowing through the secondary water pipe, the turbine can rotate so as to drive the generator to generate electricity.

In an example embodiment, although not shown in Figure 3, the method includes fitting an inlet valve within the secondary water pipe, adjacent its inlet, and fitting an outlet valve within the secondary water pipe, adjacent its outlet.

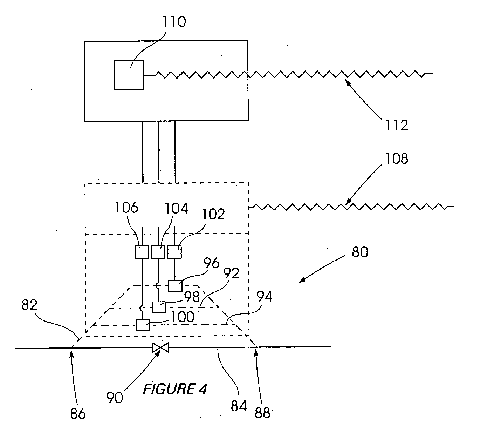

Turning now to Figure 4, a variation of the electricity generating arrangement 10 shown in Figure 1 is disclosed, in which a plurality of turbines and generators is provided. In particular, an electricity generating arrangement 80 comprises a main secondary water conduit 82, typically in the form of a pipe, fitted to a primary water conduit 84, which, again, is typically also in the form of a pipe.

The main secondary water pipe 82 defines an inlet 86 for allowing water flowing through the primary water pipe 84 to enter the main secondary water pipe 82. The main secondary water pipe 82 further defines an outlet 88 for allowing water flowing through the main secondary water pipe 82 to exit the main secondary water pipe 82 so as to rejoin the primary water pipe 84, as described above.

The primary water pipe 84 includes a pressure reducing device in the form of a pressure reducing valve 90, as is well known in the art.

Significantly, a plurality of additional secondary water conduits 92, 94 extend across the ends of the main secondary water pipe 82 so as to define a parallel arrangement of secondary water pipes 82, 92 and 94.

Rotatable turbines 96, 98 and 100 are located within the secondary water pipes 82, 92 and 94, respectively. Each turbine 96, 98 and 100 is connectable to a generator 102, 104 and 106 so that under the influence of the water flowing through the secondary water pipes 82, 92 and 94 the turbines 96, 98 and 100 can rotate so as to drive the generators 102, 104 and 106 to generate electricity. The generated electricity may either be distributed locally via a local cable distribution network, as indicated by arrow 108, or the voltage may be stepped up using suitable transformers 110 for long distance distribution over a high voltage network, as indicated by arrow 112.

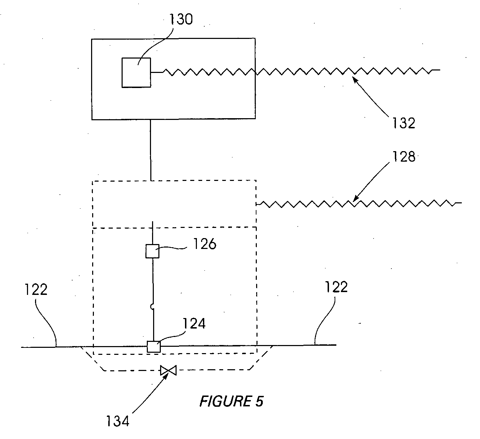

In a further version of the invention, turning now to Figure 5, an electricity generating arrangement 120 comprises replacing a pressure reducing device, which is typically fitted within a primary water conduit 122, with a rotatable turbine 124. The turbine 124 may then in turn be connected to a generator 126, so that water flowing through the primary water conduit can drive the generator 126 to generate electricity. As described above, the generated electricity may either be distributed locally via a local cable distribution network, as indicated by arrow 128, or the voltage may be stepped up using suitable transformers 130 for long distance distribution over a high voltage network, as indicated by arrow 132.

A pressure reducing device, such as a pressure reducing valve 134, may be fitted adjacent the primary water conduit 122, so as to be substantially in parallel with the rotatable turbine 124.

In one version of the embodiment shown in Figure 5, a secondary/by-pass may be fitted in parallel with the primary water conduit 122, for use when the turbine 124 is not operational.

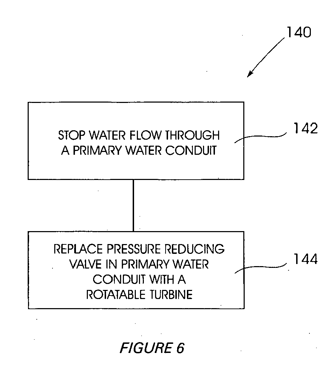

Turning now to Figure 6, which is related to the arrangement shown in Figure 5, a further aspect of the present invention provides a method 140 of fitting an electricity generating arrangement to a primary water conduit, the primary water conduit comprising a pressure reducing device. The method 140 comprises stopping the flow of water through the primary water conduit, as indicated by block 142, and then replacing the pressure reducing device within the primary water conduit with a rotatable turbine. As described above, the turbine is connectable to a generator, so that water flowing through the primary water conduit can drive the generator to generate electricity.

Since it is envisaged that the primary water pipe will form part of a residential/municipal water pipe system, the present invention discloses an electricity generating arrangement that is relatively quick, easy and inexpensive to setup.

## Claims

1. An electricity generating arrangement comprising:
at least one secondary water conduit (12) fitted to a primary water conduit (14), the primary water (14) conduit being fitted with a pressure reducing valve (20), the secondary water conduit (12) defining an inlet (16), before the pressure reducing valve (20), for allowing water flowing through the primary water conduit (14) to enter the secondary water conduit (12), and an outlet (18) for allowing water flowing through the secondary water conduit (12) to exit the secondary water conduit (12) so as to rejoin the primary water conduit (14) after the pressure reducing valve (20), the flow of water through the secondary water conduit (14) thus bypassing the pressure reducing valve (20) of the primary water conduit (14), the secondary water conduit (12) comprising a substantially elongate portion (30) that runs substantially parallel to the primary water conduit (14); and
at least one rotatable turbine (22) located within the secondary water conduit (12), each turbine (22) being connectable to a generator (24) so that under the influence of the water flowing through the secondary water conduit (12), the turbine (22) can rotate so as to drive the generator (24) to generate electricity.

2. The electricity generating arrangement of claim 1, wherein an inlet valve (26) is located within the secondary water conduit (12), adjacent the inlet (16), and an outlet valve (28) is located within the secondary water conduit (12), adjacent the outlet (18).

3. The electricity generating arrangement of any one of the preceding claims, wherein the turbine (22) comprises either a fin arrangement or a threaded screw.

4. The electricity generating arrangement of any one of the preceding claims, wherein the primary water conduit (14) is part of a residential/municipal water distribution system.

5. The electricity generating arrangement of any one of claims 1 to 3, wherein the primary water conduit (14) is defined by a natural conduit carrying water.

6. A method of fitting an electricity generating arrangement to a primary water conduit (14), the primary water conduit (14) being fitted with a pressure reducing valve (20), the method comprising:
stopping the flow of water through the primary water conduit (14);
defining an outlet (18) and an inlet (16) in a side wall of the primary water conduit (14), on opposite sides of the pressure reducing valve (20); and
fitting a secondary water conduit (12) to the primary water conduit (14), the secondary water conduit (12) comprising a substantially elongate portion (30) that runs substantially parallel to the primary water conduit (14), with the secondary water conduit (12) defining an inlet (16) that can be in fluid communication with the outlet (18) defined in the primary water conduit (14), the secondary water conduit (12) defining an outlet (18) that can be in fluid communication with the inlet (16) defined in the primary water conduit (14), the secondary water conduit (12) housing a rotatable turbine (22), the turbine being connectable to a generator (24),
so that water flowing through the primary water conduit (14) can enter the secondary water conduit (12), flow through the secondary water conduit (12) and exit the secondary water conduit (12) so as to rejoin the primary water conduit (14), thus bypassing the pressure reducing valve (20) of the primary water conduit (14), so that under the influence of the water flowing through the secondary water conduit (12), the turbine (22) can rotate so as to drive the generator (24) to generate electricity.

7. The method of claim 6, which includes fitting an inlet valve (26) within the secondary water conduit (12), adjacent its inlet (16), and fitting an outlet valve (28) within the secondary water conduit (12), adjacent its outlet (18).

## Patentansprüche

1. Anordnung zur Erzeugung von Elektrizität, welche umfasst:
mindestens eine sekundäre Wasserleitung (12), die an einer primären Wasserleitung (14) angebracht ist, wobei die primäre Wasserleitung (14) mit einem Druckreduzierventil (20) ausgestattet ist, wobei die sekundäre Wasserleitung (12) einen Einlass (16) vor dem Druckreduzierventil (20) definiert, um zu ermöglichen, dass durch die primäre Wasserleitung (14) fließendes Wasser in die sekundäre Wasserleitung (12) eintritt, und einen Auslass (18), um zu ermöglichen, dass durch die sekundäre Wasserleitung (12) fließendes Wasser aus der sekundären Wasserleitung (12) austritt, so dass es nach dem Druckreduzierventil (20) wieder in die primäre Wasserleitung (14) eintritt, wobei der Strom von Wasser durch die sekundäre Wasserleitung (12) somit das Druckreduzierventil (20) der primären Wasserleitung (14) umgeht, wobei die sekundäre Wasserleitung (12) einen im Wesentlichen lang gestreckten Abschnitt (30) umfasst, welcher im Wesentlichen parallel zu der primären Wasserleitung (14) verläuft; und
mindestens eine drehbare Turbine (22), die innerhalb der sekundären Wasserleitung (12) angeordnet ist, wobei jede Turbine (22) mit einem Generator (24) verbindbar ist, so dass unter dem Einfluss des durch die sekundäre Wasserleitung (12) fließenden Wassers die Turbine (22) rotieren kann, um den Generator (24) anzutreiben, um Elektrizität zu erzeugen.

2. Anordnung zur Erzeugung von Elektrizität nach Anspruch 1, wobei ein Einlassventil (26) innerhalb der sekundären Wasserleitung (12), dem Einlass (16) benachbart, angeordnet ist und ein Auslassventil (28) innerhalb der sekundären Wasserleitung (12), dem Auslass (18) benachbart, angeordnet ist.

3. Anordnung zur Erzeugung von Elektrizität nach einem der vorhergehenden Ansprüche, wobei die Turbine (22) entweder eine Rippenanordnung oder eine Gewindeschraube umfasst.

4. Anordnung zur Erzeugung von Elektrizität nach einem der vorhergehenden Ansprüche, wobei die primäre Wasserleitung (14) Teil eines Haushalts-/kommunalen Wasserverteilungssystems ist.

5. Anordnung zur Erzeugung von Elektrizität nach einem der Ansprüche 1 bis 3, wobei die primäre Wasserleitung (14) durch einen natürlichen wasserführenden Kanal definiert ist.

6. Verfahren zur Installation einer Anordnung zur Erzeugung von Elektrizität an einer primären Wasserleitung (14), wobei die primäre Wasserleitung (14) mit einem Druckreduzierventil (20) ausgestattet ist, wobei das Verfahren umfasst:
Stoppen des Flusses von Wasser durch die primäre Wasserleitung (14);
Definieren eines Auslasses (18) und eines Einlasses (16) in einer Seitenwand der primären Wasserleitung (14), auf gegenüberliegenden Seiten des Druckreduzierventils (20); und
Anbringen einer sekundären Wasserleitung (12) an der primären Wasserleitung (14), wobei die sekundäre Wasserleitung (12) einen im Wesentlichen lang gestreckten Abschnitt (30) umfasst, welcher im Wesentlichen parallel zu der primären Wasserleitung (14) verläuft, wobei die sekundäre Wasserleitung (12) einen Einlass (16) definiert, welcher in Fluidverbindung mit dem in der primären Wasserleitung (14) definierten Auslass (18) stehen kann, wobei die sekundäre Wasserleitung (12) einen Auslass (18) definiert, welcher in Fluidverbindung mit dem in der primären Wasserleitung (14) definierten Einlass (16) stehen kann, wobei in der sekundären Wasserleitung (12) eine drehbare Turbine (22) angeordnet ist, wobei die Turbine mit einem Generator (24) verbindbar ist,
so dass durch die primäre Wasserleitung (14) fließendes Wasser in die sekundäre Wasserleitung (12) eintreten, durch die sekundäre Wasserleitung (12) fließen und aus der die sekundären Wasserleitung (12) austreten kann, so dass es wieder in die primäre Wasserleitung (14) eintritt, wobei es somit das Druckreduzierventil (20) der primären Wasserleitung (14) umgeht, so dass unter dem Einfluss des durch die sekundäre Wasserleitung (12) fließenden Wassers die Turbine (22) rotieren kann, um den Generator (24) anzutreiben, um Elektrizität zu erzeugen.

7. Verfahren nach Anspruch 6, welches das Anbringen eines Einlassventils (26) innerhalb der sekundären Wasserleitung (12), ihrem Einlass (16) benachbart, und das Anbringen eines Auslassventils (28) innerhalb der sekundären Wasserleitung (12), ihrem Auslass (18) benachbart, beinhaltet.

## Revendications

1. Assemblage de production d'électricité, comprenant :
au moins une conduite d'eau secondaire (12), adaptée à une conduite d'eau primaire (14), la conduite d'eau primaire (14) étant équipée d'une soupape de réduction de la pression (20), la conduite d'eau secondaire (12) définissant une entrée (16), devant la soupape de réduction de la pression (20), pour permettre l'entrée de l'eau s'écoulant à travers la conduite d'eau primaire (14) dans la conduite d'eau secondaire (12), et une sortie (18), pour permettre la sortie de l'eau s'écoulant à travers la conduite d'eau secondaire (12) de la conduite d'eau secondaire (12), de sorte à rejoindre la conduite d'eau primaire (14), derrière la soupape de réduction de la pression (20), l'écoulement de l'eau à travers la conduite d'eau secondaire (14) contournant ainsi la soupape de réduction de la pression (20) de la conduite d'eau primaire (14), la conduite d'eau secondaire (12) comprenant une partie pratiquement allongée (30), s'étendant de manière pratiquement parallèle à la conduite d'eau primaire (14) ; et
au moins une turbine rotative (22), agencée dans la conduite d'eau secondaire (12), chaque turbine (22) pouvant être connectée à un générateur (24), de sorte que sous l'influence de l'eau s'écoulant à travers la conduite d'eau secondaire (12), la turbine (22) peut tourner afin d'entraîner le générateur (24) pour produire de l'électricité.

2. Assemblage de production d'électricité selon la revendication 1, dans lequel une soupape d'entrée (26) est agencée dans la conduite d'eau secondaire (12), près de l'entrée (16), une soupape de sortie (28) étant agencée dans la conduite d'eau secondaire (12), près de la sortie (18).

3. Assemblage de production d'électricité selon l'une quelconque des revendications précédentes, dans lequel la turbine (22) comprend un agencement à ailettes ou une vis filetée.

4. Assemblage de production d'électricité selon l'une quelconque des revendications précédentes, dans lequel la conduite d'eau primaire (14) fait partie d'un système de distribution d'eau résidentiel/municipal.

5. Assemblage de production d'électricité selon l'une quelconque des revendications 1 à 3, dans lequel la conduite d'eau primaire (14) est définie par une conduite naturelle transportant de l'eau.

6. Procédé d'ajustement d'un assemblage de production d'électricité sur une conduite d'eau primaire (14), la conduite d'eau primaire (14) étant équipée d'une soupape de réduction de la pression (20), le procédé comprenant les étapes ci-dessous :
arrêt de l'écoulement de l'eau à travers la conduite d'eau primaire (14) ;
définition d'une sortie (18) et d'une entrée (16) dans une paroi latérale de la conduite d'eau primaire (14), sur les côtés opposés de la soupape de réduction de la pression (20) ; et
ajustement d'une conduite d'eau secondaire (12) sur la conduite d'eau primaire (14), la conduite d'eau secondaire (12) comprenant une partie pratiquement allongée (30), s'étendant de manière pratiquement parallèle à la conduite d'eau primaire (14), la conduite d'eau secondaire (12) définissant une entrée (16), pouvant être en communication de fluide avec la sortie (18) définie dans la conduite d'eau primaire (14), la conduite d'eau secondaire (12) définissant une sortie (18), pouvant être en communication de fluide avec l'entrée (16)définie dans la conduite d'eau primaire (14), la conduite d'eau secondaire (12) logeant une turbine rotative (22), la turbine pouvant être connectée à un générateur (24) ;
de sorte que l'eau s'écoulant à travers la conduite d'eau primaire (14) peut entrer dans la conduite d'eau secondaire (12), s'écouler à travers la conduite d'eau secondaire (12) et sortir de la conduite d'eau secondaire (12), de sorte à rejoindre la conduite d'eau primaire (14), contournant ainsi la soupape de réduction de la pression (20) de la conduite d'eau primaire (14), de sorte que sous l'influence de l'eau s'écoulant à travers la conduite d'eau secondaire (12), la turbine (22) peut tourner afin d'entraîner le générateur (24) pour produire de l'électricité.

7. Procédé selon la revendication 6, englobant les étapes d'ajustement d'une soupape d'entrée (26) dans la conduite d'eau secondaire (12), près de son entrée (16), et d'ajustement d'une soupape de sortie (28) dans la conduite d'eau secondaire (12), près de sa sortie (18).
